Europäisches Patentamt

European Patent Office

Office européen des brevets

(19)

(11) Publication number: **0 495 134 B1**

## EUROPEAN PATENT SPECIFICATION

(45) Date of publication of patent specification: **11.01.95**

(21) Application number: **91100364.8**

(22) Date of filing: **14.01.91**

(51) Int. Cl.⁶: **C08G 18/48**, C08G 18/50, C08G 18/66, //(C08G18/48, 101:00)

(54) **Rigid polyurethane foam and heat insulator obtained therefrom.**

(43) Date of publication of application:
**22.07.92 Bulletin 92/30**

(45) Publication of the grant of the patent:
**11.01.95 Bulletin 95/02**

(84) Designated Contracting States:
**DE ES FR IT**

(56) References cited:
EP-A- 0 091 828    EP-A- 0 293 060
EP-A- 0 372 539    EP-A- 0 408 048
WO-A-90/11313    US-A- 4 614 754

**CHEMICAL ABSTRACTS, vol. 107, no. 20, November 1987, page 72, abstract no.177536h, Columbus, Ohio, US; &JP-A-62 81 414**

**CHEMICAL ABSTRACTS, vol. 95, no. 9, November 1981, page 37, abstract no.151637a, Columbus, Ohio, US; &JP-A-56 61 422**

(73) Proprietor: **HITACHI, LTD.**
**6, Kanda Surugadai 4-chome**
**Chiyoda-ku,**
**Tokyo 100 (JP)**

(72) Inventor: **Kuroishi, Kazuyoshi**
**2723-2, Nishimizushiro,**
**Ohiramachi**
**Shimotsuga-gun,**
**Tochigi-ken (JP)**
Inventor: **Kobayashi, Isao**
**830-23, Otsukamachi**
**Tochigi-shi (JP)**
Inventor: **Naka, Reishi**
**4006-1, Tomida, Ohiramachi**
**Shimotsuga-gun,**
**Tochigi-ken (JP)**

(74) Representative: **Dost, Wolfgang, Dr.rer.nat.,**
**Dipl.-Chem. et al**
**Patent- und Rechtsanwälte**
**Bardehle . Pagenberg . Dost . Altenburg .**
**Frohwitter . Geissler & Partner**
**Postfach 86 06 20**
**D-81633 München (DE)**

**Description**

BACKGROUND OF THE INVENTION

This invention relates to a closed-cell rigid polyurethane foam having a remarkably low density, a low thermal conductivity and well balanced various properties obtained by using only water as a blowing agent, a process for producing such a polyurethane foam, and use thereof as heat insulator, for example, in refrigerators.

Rigid polyurethane foams are usually obtained by reacting a polyol component and an isocyanate component in the presence of a blowing agent, a reaction catalyst, and a foam stabilizer. Heretofore, as the blowing agent, there have been used fluoro carbon type blowing agents having low boiling points such as trichloromonofluoromethane ($CCl_3F$), etc. But $CCl_3F$ is one of hardly decomposable chlorofluorocarbons (CFC) which are chlorofluoro substituted hydrocarbons. It has recently been found that when such a hardly decomposable CFC is released into the atmosphere, it acts to destroy the ozone layer in the stratosphere or cause an earth surface temperature rise due to a so-called hothouse effect. Thus, the use of such a CFC becomes a serious global environmental pollution problem in recent years. In the future, the production and consumption of the hardly decomposable CFC's are to be reduced stepwise. Thus, how to reduce their use becomes a worldwide problem.

On the other hand, it has long been known in the art that water is usable as one component of blowing agent. For example, Japanese Patent Unexamined Publication No. 53-9797 proposes the use of a fluorochlorinated hydrocarbon and water (0.2 to 3 parts by weight per 100 parts by weight of polyol component) as a blowing agent. But the use of water causes a serious problem in that its use even in a small amount caused deterioration of heat insulating properties or formation of gas boils in the product, resulting in unbalance of the properties required for a rigid urethane foam. Japanese Patent Unexamined Publication Nos. 59-84913 and 62-81414 disclose the co-use of water and CFC as a blowing agent. But in order to maintain good properties required, the amount of water is limited, for example, to less than 1% by weight in the blowing agent.

Thus, the use of water alone as the blowing agent has not been realized in industrial production of rigid polyurethane foams.

SUMMARY OF THE INVENTION

It is an object of the present invention to provide a rigid polyurethane foam having excellent properties as well as excellent heat insulating properties and excellent dimensional stability using only water as the blowing agent, not using fluorocarbon blowing agents including substitutes therefor. It is another object of the present invention to provide a process for producing such a rigid polyurethane foam. It is a further object of the present invention to provide a process for using such a rigid polyurethane foam as a heat insulator, for example, in a refrigerator.

The present invention provides a rigid polyurethane foam produced by reacting a polyol component with an isocyanate component using only water as a blowing agent, said polyol component being a mixed polyol composition comprising

(a) 30 to 55% by weight of a polyether polyol obtained by adding ethylene oxide and propylene oxide to an aromatic amine,

(b) 10 to 20% by weight of a polyether polyol obtained by adding propylene oxide to an alcoholic amine,

(c) 5 to 15% by weight of a polyether polyol obtained by adding propylene oxide to an octafunctional polyol,

(d) 10 to 35% by weight of a polyether polyol obtained by adding propylene oxide to a tetrafunctional polyol,

(e) 0 to 15% by weight of a polyester polyol obtained by condensing diethylene glycol and dipropylene glycol with a polycarboxylic acid or an anhydride thereof, and

(f) 0 to 25% by weight of a polyether polyol obtained by adding ethylene oxide and propylene oxide to an aliphatic amine.

The present invention further provides a process for producing a rigid polyurethane foam which comprises reacting a polyol component with an isocyanate component in the presence of only water as a blowing agent, a reaction catalyst and a foam stabilizer, said polyol component being a mixed polyol composition comprising

(a) 30 to 55% by weight of a polyether polyol obtained by adding ethylene oxide and propylene oxide to an aromatic amine,

2

(b) 10 to 20% by weight of a polyether polyol obtained by adding propylene oxide to an alcoholic amine,

(c) 5 to 15% by weight of a polyether polyol obtained by adding propylene oxide to an octafunctional polyol,

(d) 10 to 35% by weight of a polyether polyol obtained by adding propylene oxide to a tetrafunctional polyol,

(e) 0 to 15% by weight of a polyester polyol obtained by condensing diethylene glycol and dipropylene glycol with a polycarboxylic acid or an anhydride thereof, and

(f) 0 to 25% by weight of a polyether polyol obtained by adding ethylene oxide and propylene oxide to an aliphatic amine.

This invention still further provides a process for using said rigid polyurethane foam, for example, as a heat insulator, for example, in refrigerators.

BRIEF DESCRIPTION OF THE DRAWINGS

FIG. 1(a) is a perspective view of a hollow casing used for producing a heat insulator.

FIG. 1(b) is a sectional view taken along the line A-A'.

FIG. 2 is a perspective view of a refrigerator wherein a rigid polyurethane foam is to be packed in an outer case of the refrigerator.

DESCRIPTION OF THE PREFERRED EMBODIMENTS

The present invention is characterized by using only water as a blowing agent. Heretofore, when only water was used as a blowing agent, the gas generated by the reaction of water with an isocyanate was only $CO_2$, which was included in the resulting foam. Since $CO_2$ had a larger thermal conductivity than trichloromonofluoromethane, heat insulating properties of the resulting foam were 1.4 to 1.5 times inferior to those of the foam obtained by using trichloromonofluoromethane. Further, since $CO_2$ gas was easily released through the polymer, changes with the lapse of time easily took place. Further, dimensional stability, particularly at high temperatures, was no good so as to bring about shrinkage, so that it was impossible to use water alone as a blowing agent.

But according to the present invention, these defects are completely removed by using the special polyol component.

The special polyol component used in the present invention is a mixed polyol composition comprising

(a) 30 to 55% by weight of a polyether polyol obtained by adding ethylene oxide and propylene oxide to an aromatic amine,

(b) 10 to 20% by weight of a polyether polyol obtained by adding propylene oxide to an alcoholic amine,

(c) 5 to 15% by weight of a polyether polyol obtained by adding propylene oxide to an octafunctional polyol,

(d) 10 to 35% by weight of a polyether polyol obtained by adding propylene oxide to a tetrafunctional polyol,

(e) 0 to 15% by weight of a polyester polyol obtained by condensing diethylene glycol and dipropylene glycol with a polycarboxylic acid or an anhydride thereof, and

(f) 0 to 25% by weight of a polyether polyol obtained by adding ethylene oxide and propylene oxide to an aliphatic amine.

The aromatic amine includes, for example, tolylenediamine, phenylenediamine, xylylenediamine and naphthalenediamine.

The alcoholic amine includes, for example, triethanolamine, diethanolamine, monoethanolamine, etc.

The octafunctional polyol includes, for example sucrose.

The tetrafunctional polyol includes, for example, methyl glucoside and pentaerythritol.

The polycarboxylic acid and anhydride thereof includes, for example, phthalic anhydride, phthalic acid, adipic acid, succinic acid, succinic anhydride, maleic acid and maleic anhydride.

The aliphatic amine includes, for example, ethylenediamine, diaminopropane, diaminobutane, tetramethylenediamine, pentamethylenediamine and hexamethylenediamine.

Among these polyol components, a preferable mixed polyol composition comprises

(a) 30 to 55% by weight of a polyether polyol obtained by adding ethylene oxide and propylene oxide to tolylenediamine,

(b) 10 to 20% by weight of a polyether polyol obtained by adding propylene oxide to triethanolamine,

(c) 5 to 15% by weight of a polyether polyol obtained by adding propylene oxide to sucrose,

(d) 10 to 35% by weight of a polyether polyol obtained by adding propylene oxide to methyl glucoside,

(e) 0 to 15% by weight of a polyester polyol obtained by condensing diethylene glycol and dipropylene glycol with phthalic anhydride, and

(f) 0 to 25% by weight of a polyether polyol obtained by adding ethylene oxide and propylene oxide to ethylenediamine.

The mixed polyol composition preferably has an average OH value of 330 to 380. When the average OH value is less than 330, there is a tendency to lower dimensional stability. On the other hand, when the averge OH value is more than 380, there is a tendency to bring about undesirably friability.

In the mixed polyol composition, the individual polyol components seems to have the following effects:

The component (a) is effective for maintaining thermal conductivity.

The component (b) is effective for improving fluidity and adhesiveness.

The component (c) is effective for improving low-temperature dimensional stability, compression strength and mold releasing properties.

The component (d) is effective for preventing shrinkage at high temperatures.

The components (e) and (f) are effective for improving thermal conductivity and changes with the lapse of time.

Considering the foam density, thermal conductivity, dimensional stability, adhesiveness and mold releasing properties, the most preferable polyol composition comprises:

the component (a) in the range of 35-45% by weight, particularly 40% by weight,

the component (b) in the range of 10-14% by weight, particularly 12% by weight,

the component (c) in the range of 6-10% by weight, particularly 8% by weight,

the component (d) in the range of 15-25% by weight, particularly 20% by weight,

the component (e) in the range of 3-7% by weight, particularly 5% by weight, and

the component (f) in the range of 10-20% by weight, particularly 15% by weight.

The most preferable average OH value is 350.

As the isocyanate component, there can be used diphenylmethane diisocyanate, polymethylene polyphenyl isocyanate, tolylene diisocyanate, tolidine diisocyanate, xylene diisocyanate, naphthalene diisocyanate, hexamethylene diisocyanate, isophorone diisocyanate, dicyclohexylmethane diisocyanate, triphenylmethane triisocyanate, etc., modified isocyanates obtained by modifying these isocyanates partially with various methods and various compounds such as sucrose, methyl glucoside, pentaerythritol, trimethylolpropane, glycerin, propylene glycol, ethylene glycol, etc. These isocyanate compounds can be used alone or as a mixture thereof.

The isocyanate compound is used preferably in an amount so as to make the ratio of NCO of isocyanate to OH of polyol, i.e., NCO/OH, in the range of 1.00 to 1.20, most preferably NCO/OH = 1.0.

In the present invention, only water is used as the blowing agent. The water is preferably used in an amount of 4 to 7 parts by weight, more preferably 5 to 6 parts by weight, per 100 parts by weight of the polyol component. If the amount of water is too small, the density of the rigid polyurethane foam extremely increases, resulting in raising the production cost undesirably. On the other hand, if the amount of water is too much, the friability undesirably increases too much.

As the reaction catalyst, there can be used tertiary amines such as tetramethylhexamethylenediamine, trimethylaminoethylpiperidine, pentamethyldiethylenetriamine, triethylenediamine, dimethylethanolamine, tetramethylpropylenediamine, dimethylcyclohexylamine, tetramethylethylenediamine, bis(2-dimethylaminothyl) ether, dimethylbenzylamine, methylmorpholine, ethylmorpholine, etc. The reaction catalyst is used in an amount of preferably 0.3 to 4 parts by weight per 100 parts by weight of the polyol component.

As the foam stabilizer, there can be used conventionally used organosilicon compounds, fluorine-containing surface active agents, cationic surface active agents, anionic surface active agents, nonionic surface active agents, etc. The foam stabilizer is used in an amount of preferably 0.5 to 5 parts by weight, more preferably 1.5 to 3 parts by weight, per 100 parts by weight of the polyol component.

The composition for producing rigid polyurethane foams may further contain one or more conventional additives such as fire retardants, fillers, reinforcing fibers, colorants, etc.

Rigid polyurethane foams can be produced by a one-shot process, a semi-prepolymer process, a prepolymer process, a spray process and other suitable methods. Among them, the one-shot process is preferred.

Foaming can be carried out by using a conventional foaming machine, for example, Model PU-30 manufactured by Promat AG. Foaming conditions slightly change depending on the kind of foaming machine used but usually are as follows:

| liquid temperature: | 25 - 40 °C |
|---|---|
| pouring pressure: | 80 - 150 kg/cm$^2$ |
| pouring amount: | 15 - 30 kg/min |
| mold temperature: | 40 - 50 °C |

More preferable foaming conditions are as follows:

| liquid temperature: | 30 °C |
|---|---|
| pouring pressure: | 120 kg/cm$^2$ |
| pouring amount: | 25 kg/min |
| mold temperature: | 45 °C |

The thus produced rigid polyurethane foams have a density of 23 to 27 kg/m$^3$ in terms of free foam density and a thermal conductivity of 18.0 - 19.0 x 10$^{-3}$ kcal/m•hr•°C. The dimensional stability is the same as that of conventional rigid polyurethane foams and the changing rate after allowed to stand for 2 months is 1.5% or less, or 3.0% or less even under worse conditions, either at a high-temperature side (70°C) or a low-temperature side (-20°C). The compression strength is 1.4 kg/cm$^2$ or more. Further, the adhesiveness and mold releasing properties are the same as those of conventional rigid polyurethane foams.

Thus, the rigid polyurethane foams of the present invention can be used not only as a heat insulator for refrigerators but also as a heat insulator for other electric machines, building structures, vehicles, etc., or as heat insulating molded articles. In addition to the use as a heat insulator, the rigid polyurethane foams of the present invention can be effectively used as a material for various types of buoyant articles such as buoys for fishery by making use of their small specific gravity and rigidity.

The present invention is illustrated by way of the following Examples and Comparative Examples, in which all parts and percents are by weight unless otherwise specified.

Comparative Examples 1 and 2

Using 100 parts of polyol component having an average OH value of 450 to 480 as shown in Table 1 (EO = ethylene oxide, PO = propylene oxide), 1.5 parts of water and 48 parts of trichloromonofluoromethane (R-11, a trade name, mfd. by E.I. DuPont De Nemours & Co., Inc.) as a blowing agent (in Comparative Example 1, 6 parts of only water), 2.5 parts of a 2:1 mixture of tetramethylhexamethylenediamine (Kao Lizer No. 1, a trade name, mfd. by Kao Corp.) and trimethylaminoethylpiperidine (Kao Lizer No. 8, a trade name, mfd. by Kao Corp.) as a reaction catalyst, 1.5 parts of an organo-silicon compound (L-5340, mfd. by Nippon Unikar Co.) as a foam stabilizer, and a necessary amount of diphenylmethane diisocyanate (44V20, a trade name, mfd. by Sumitomo Bayer Urethane Co., Ltd.) so as to make NCO/OH ratio 1.10, a rigid polyurethane foam was produced after foaming and curing.

Comparative Example 3, Examples 1 to 12

Foaming and curing were carried out by using 100 parts of polyol components having an average OH value of 330 - 380 listed in Table 1 (EO = ethylene oxide, PO = propylene oxide, DEG = diethylene glycol, DPG = dipropylene glycol), 5.5, 4 and 7 parts of water as a blowing agent, 0.5 to 2 parts of a 2:2:1 mixture of tetramethylhexamethylenediamine (Kao Lizer No. 1, a trade name, mfd. by Kao Corp.), trimethylaminoethylpiperidine (Kao Lizer No. 8, a trade name, mfd. by Kao Corp.) and pentamethyldiethylenetriamine (Kao Lizer No. 3, a trade name, mfd. by Kao Corp.) as a reaction catalyst, 2 parts of an organosilicon compound (SH-193, a trade name, mfd. by Toray Industries, Inc.) as a foam stabilizer, and a necessary amount of diphenylmethane diisocyanate as an isocyanate component (44V20, a trade name, mfd. by Sumitomo Bayer Urethane Co., Ltd.) so as to make NCO/OH ratio 1.10. Properties of the resulting rigid polyurethane foams were examined and listed in Table 1. The properties were determined as follows.

(1) Free foam density:

Density (kg/m$^3$) of a foam obtained by foaming in a mold of 200 x 200 x 200 mm in inside dimensions made of a veneer board.

5

(2) Panel foam density:

Density (kg/m$^3$) of a foam obtained by foaming in a mold of 400 x 600 x 35 mm in inside dimensions made of Al at mold temperature of 40°C.

(3) Rate of low-temperature dimensional change:

The rate of change in thickness direction of a panel foam of 400 x 600 x 35 mm after standing at -20°C for 2 months.

(4) Rate of high-temperature dimensional change:

The rate of change in thickness direction of a panel foam of 400 x 600 x 35 mm after standing at 70°C for 2 months.

(5) Friability:

Measured according to the method of ASTM C-421-61.
Friability is an item for evaluation for knowing "fragility" or brittleness of rigid polyurethane foams. The smaller the value of friability becomes, the less the surface wear amount becomes and the better the adhesiveness becomes.

(6) Thermal conductivity:

Thermal conductivity of a panel foam of 200 x 200 x 50 mm was measured at an average temperature of 23.8°C by using Anacon Model 88.

(7) Compression strength:

Foam strength when a foam of 50 mm in diameter and 35 mm in thickness was compressed by 10%.

(8) Mold release time:

The time from the beginning of pouring of a liquid composition into a mold till removal of the resulting foam from the mold.

Table 1

| Example No. | | Comparative Example | | | Example | | |
|---|---|---|---|---|---|---|---|
| | | 1 | 2 | 3 | 1 | 2 | 3 |
| Polyol | (a) Tolylenediamine +EO/PO (%) | 65 | 65 | 65 | 50 | 45 | 45 |
| | (b) Triethanolamine +PO (%) | - | - | 20 | 15 | 15 | 20 |
| | (c) Sucrose +PO (%) | 6 | 6 | 15 | 15 | 10 | 5 |
| | (d) Methyl glucoside +PO (%) | - | - | - | 10 | 20 | 25 |
| | (e) Phthalic anhydride + DEG/DPG (%) | - | - | - | 10 | 10 | 5 |
| | (f) Ethylenediamine +EO (%) | - | 15 | - | - | - | - |
| | (g) Propylene glycol +EO/PO (%) | 15 | 14 | - | - | - | - |
| | (h) Diethanolamine +PO (%) | 14 | - | - | - | - | - |
| Blowing agent | Water (parts) | 1.5 | 6.0 | 5.5 | 5.5 | 5.5 | 5.5 |
| | Trichloromonofluoromethane (parts) | 48 | - | - | - | - | - |
| Properties | Free foam density (kg/m3) | 21.2 | 23.2 | 25.5 | 25.3 | 25.3 | 25.5 |
| | Panel foam density (kg/m3) | 28.9 | 34.2 | 36.5 | 37.2 | 37.1 | 37.2 |
| | Rate of low-temperature dimensional change (%) | -1.2 | -1.7 | -1.5 | -1.1 | -1.0 | -1.4 |
| | Rate of high-temperature dimensional change (%) | 2.1 | -30.0 | -18.6 | -2.1 | -1.5 | -1.5 |
| | Friability (%) | 9 | 19 | 8 | 10 | 9 | 9 |
| | Thermal conductivity (10-3 kcal/m·hr·°C) | 13.5 | 19.5 | 19.4 | 18.2 | 18.5 | 18.6 |
| | Compression strength (kg/cm2) | 0.9 | 1.3 | 1.3 | 1.5 | 1.5 | 1.6 |
| | Mold release time (min) | 5 | 10 | 6 | 5 | 5 | 6 |

– Cont'd –

Table 1 (Cont'd)

– Cont'd –

| Example | 4 | 5 | 6 | 7 | 8 | 9 | 10 | 11 | 12 |
|---|---|---|---|---|---|---|---|---|---|
| | 44 | 55 | 33 | 40 | 35 | 30 | 40 | 40 | 40 |
| | 13 | 15 | 10 | 12 | 10 | 10 | 10 | 12 | 12 |
| | 8 | 10 | 7 | 8 | 5 | 5 | 5 | 8 | 8 |
| | 20 | 20 | 30 | 20 | 35 | 30 | 25 | 20 | 20 |
| | 15 | – | – | 5 | – | – | 10 | 5 | 5 |
| | – | – | 20 | 15 | 15 | 25 | 10 | 15 | 15 |
| | – | – | – | – | – | – | – | – | – |
| | – | – | – | – | – | – | – | – | – |
| | 5.5 | 5.5 | 5.5 | 5.5 | 5.5 | 5.5 | 5.5 | 4.0 | 7.0 |
| | – | – | – | – | – | – | – | – | – |
| | 25.2 | 26.0 | 24.9 | 24.9 | 25.3 | 24.7 | 25.0 | 27.8 | 22.1 |
| | 36.9 | 38.1 | 36.0 | 36.1 | 36.3 | 35.5 | 36.2 | 39.5 | 33.4 |
| | -1.5 | -0.9 | -0.9 | -0.8 | -1.2 | -1.3 | -1.2 | -0.5 | -1.5 |
| | -2.5 | -1.3 | -1.3 | -1.2 | -1.2 | -1.5 | -1.6 | -0.8 | -2.1 |
| | 10 | 11 | 8 | 8 | 10 | 8 | 9 | 7 | 12 |
| | 18.2 | 19.0 | 18.4 | 18.3 | 18.7 | 18.9 | 18.4 | 18.6 | 18.2 |
| | 1.5 | 1.7 | 1.6 | 1.6 | 1.5 | 1.4 | 1.5 | 1.9 | 1.2 |
| | 6 | 6 | 5 | 5 | 6 | 5 | 6 | 5 | 6 |

As shown in Table 1, Comparative Example 1 is a typical example of known polyurethane foam wherein known polyol components, and water and trichloromonofluoromethane as a blowing agent were used.

Comparative Example 2 uses the same polyol components and isocyanate component as used in Comparative Example 1, but uses only water as a blowing agent. Comparing with Comparative Example 1, the friability is larger and the mold release time is longer. Thus, the properties are greatly deteriorated compared with Comparative Example 1.

Comparative Example 3 contains the polyol components (a), (b) and (c), but does not contain either the polyol component (d), (e) or (f). The friability is improved remarkably, but shrinkage at high temperatures (rate of high-temperature dimensional change) is undesirably large.

In contrast, in Examples 1 to 12 wherein the mixed polyol composition of the present invention is used, the thermal conductivity is 18.2 - 19.0 x $10^{-3}$ kcal/m•hr•°C satisfying the object of the present invention. Further, the rate of high-temperature dimensional change is remarkably improved to 1.2 to 2.5%, which values are almost equal to Comparative Example 1. Moreover, the rate of low-temperature dimensional change, friability, compression strength and mold release time are as excellent as Comparative Example 1. Particularly, Example 7 wherein the mixed polyol composition comprises 40% of the component (a), 12% of the component (b), 8% of the component (c), 20% of the component (d), 5% of the component (e) and 15% of the component (f), shows the best balanced properties of foam density (including both the free foam density and the panel foam density), thermal conductivity, rates of low-temperature and high-temperature dimensional changes, friability, compression strength and mold release time.

As shown in Examples 1 to 12, even if only water is used as a blowing agent, by using the special mixed polyol composition, the thermal conductivity becomes 19.0 x $10^{-3}$ kcal/m•hr•°C or less and rigid polyurethane foams having excellent properties comparable to those of known rigid polyurethane foams including the dimensional stability can be obtained. Thus, such rigid polyurethane foams can be used effectively as a heat insulator. Further, the use of CFC which is an object of preventing air pollution can completely be removed.

Example 13

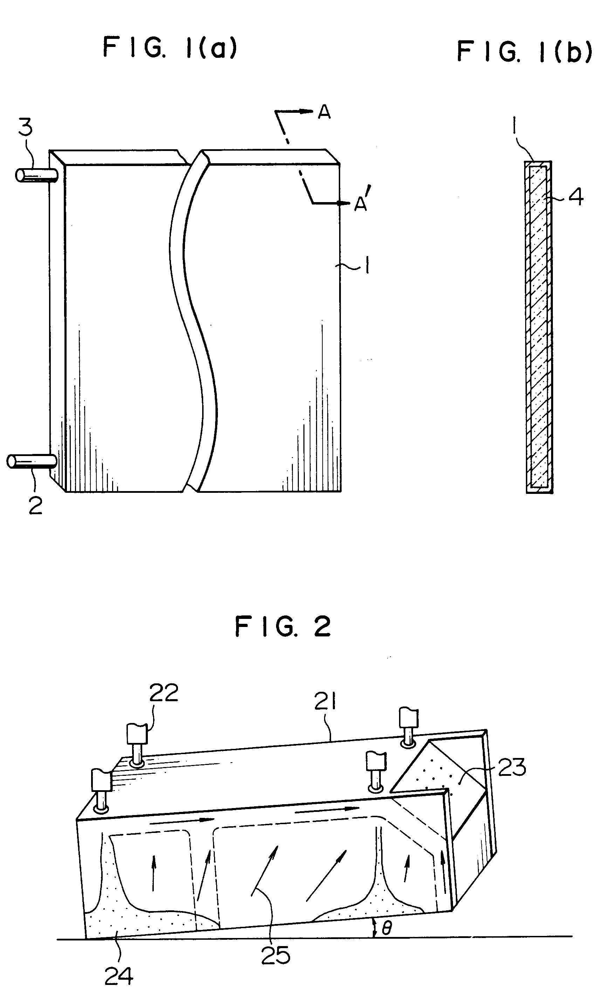

Fig. 1 illustrates an example of application of the rigid polyurethane foam of the present invention as a heat insulator used for constituting a wall of a building, casing of a reefer or the like.

As shown in Fig. 1(a), a mixed solution containing the starting component materials for forming a rigid polyurethane foam such as used in Examples 1 to 12 was poured into a flat hollow casing 1 made of a metal plate such as aluminum plate from a pouring head 2, and then foamed and cured in the same manner as in Examples 1 to 12 to form an insulating casing having the sectional shape shown in Fig. 1(b). Fig. 1(b) shows a section presented when the casing is cut along the line A-A' of Fig. 1(a). In Fig. 1(b), the hollow portion of the casing is packed with the rigid polyurethane foam 4 formed by the foaming and curing. In the pouring of said mixed solution into hollow casing 1, although not shown in the drawing, a plurality of similar hollow casings are arranged side by side in a thermostatic chamber kept at 35 to 45°C, and after a determined amount of said mixed solution has been poured into each casing, the pouring head 2 was closed. Opening 3 is a gas vent during the time when the mixed solution is being poured into the casing. It also serves as a gas vent during the foaming and curing operations. The thus obtained heat insulating casing can be effectively applied as a wall material for buildings such as houses, a heat insulator consisting the outer wall of a reefer and the like, and for other purposes for which the rigid polyurethane foams have been generally used.

Example 14

Fig. 2 illustrates an example of application of the rigid polyurethane foam of the present invention as a heat insulator to be packed in an outer case of a refrigerator. That is, Fig. 2 is by way of illustration and shows schematically the way of packing the hollow portion of an outer case 21 of a refrigerator with rigid polyurethane foam 24.

The procedure for the packing with the rigid polyurethane foam is composed of the following steps.

(1) The refrigerator outer case 21 is properly set in a foaming device (not shown) which has been heated to 35 to 45°C, at an angle of inclination $\theta$ of 10 to 20°.

(2) A stack solution of rigid polyurethane foam, which has been adjusted to a temperature of 30°C is poured into the case from the pouring heads 22.

(3) The solution poured into the case is foamed and fills up the refrigerator outer case 21.

(4) After the pouring and the foaming of the stock solution, the foam is after-cured and then released from the mold after about 5 minutes.

In Fig. 2, arrows 25 indicate the direction of flow of the stock solution of rigid polyurethane foam, and numeral 23 denotes gas vents. The refrigerator outer case 21 is held inclined at an angle of $\theta$ by taking into consideration the gas vents and the flowing direction of the stock solution of rigid polyurethane foam. Thus, by using the same stock solution (mixed solution) for rigid polyurethane foam as used in Examples 1 to 10 and by performing foaming and curing in the same manner as in Examples 1 to 12, there can be produced a refrigerator outer case packed with a rigid polyurethane foam having the excellent property values shown in Table 1.

As described above in detail, according to the present invention, a rigid polyurethane foam not at all inferior to conventional products in properties such as insulating properties can be realized without using fluorocarbon blowing agents (including substitutes therefor) such as trichloromonofluoromethane, etc., which have been used as major blowing agents, but using only water as a blowing agent. Thus, according to the present invention, the use of CFC which is an object of the air pollution control can completely be removed and a fear of destroying the ozone layer completely disappears. The present invention has a very important significance from the viewpoint of preventing the environmental pollution.

## Claims

1. A rigid polyurethane foam produced by reacting a polyol component with an isocyanate component using only water as a blowing agent, said polyol component being a mixed polyol composition comprising

   (a) 30 to 55% by weight of a polyether polyol obtained by adding ethylene oxide and propylene oxide to an aromatic amine,

   (b) 10 to 20% by weight of a polyether polyol obtained by adding propylene oxide to an alcoholic amine,

   (c) 5 to 15% by weight of a polyether polyol obtained by adding propylene oxide to an octafunctional polyol,

   (d) 10 to 35% by weight of a polyether polyol obtained by adding propylene oxide to a tetrafunctional polyol,

   (e) 0 to 15% by weight of a polyester polyol obtained by condensing diethylene glycol and dipropylene glycol with a polycarboxylic acid or an anhydride thereof, and

   (f) 0 to 25% by weight of a polyether polyol obtained by adding ethylene oxide and propylene oxide to an aliphatic amine.

2. A rigid polyurethane foam according to Claim 1, wherein the aromatic amine in the component (a) is tolylenediamine, the alcoholic amine in the component (b) is triethanolamine, the octafunctional polyol in the component (c) is sucrose, the tetrafunctional polyol in the component (d) is methyl glucoside, the polycarboxylic acid or an anhydride thereof in the component (e) is phthalic anhydride, and the aliphatic amine in the component (f) is ethylenediamine.

3. A rigid polyurethane foam according to Claim 2, wherein the amount of component (a) is 35 to 45% by weight, the amount of the component (b) is 10 to 14% by weight, the amount of the component (c) is 6 to 10% by weight, the amount of the component (d) is 15 to 25% by weight, the amount of the component (e) is 3 to 7% by weight, and the amount of the component (f) is 10 to 20% by weight.

4. A rigid polyurethane foam according to any one of Claims 1 to 3, wherein the mixed polyol composition has an average OH value of 330 to 380.

5. A rigid polyurethane foam according to any one of Claims 1 to 3, wherein the ratio of NCO of the isocyanate component to OH of the polyol component, NCO/OH, is 1.00 to 1.20.

6. A rigid polyurethane foam according to any one of Claims 1 to 5, wherein the water is used in an amount of 4 to 7 parts by weight per 100 parts by weight of the polyol component.

7. A process for producing a rigid polyurethane foam which comprises reacting a polyol component with an isocyanate component using only water as a blowing agent, said polyol component being a mixed polyol composition comprising

   (a) 30 to 55% by weight of a polyether polyol obtained by adding ethylene oxide and propylene oxide to an aromatic amine,

   (b) 10 to 20% by weight of a polyether polyol obtained by adding propylene oxide to an alcoholic amine,

   (c) 5 to 15% by weight of a polyether polyol obtained by adding propylene oxide to an octafunctional polyol,

(d) 10 to 35% by weight of a polyether polyol obtained by adding propylene oxide to a tetrafunctional polyol,

(e) 0 to 15% by weight of a polyester polyol obtained by condensing diethylene glycol and dipropylene glycol with a polycarboxylic acid or an anhydride thereof, and

(f) 0 to 25% by weight of a polyether polyol obtained by adding ethylene oxide and propylene oxide to an aliphatic amine.

8. A process according to Claim 7, wherein the aromatic amine in the component (a) is tolylenediamine, the alcoholic amine in the component (b) is triethanolamine, the octafunctional polyol in the component (c) is sucrose, the tetrafunctional polyol in the component (d) is methyl glucoside, the polycarboxylic acid or an anhydride thereof in the component (e) is phthalic anhydride, and the aliphatic amine in the component (f) is ethylenediamine.

9. A process according to any one of Claims 7 to 8, wherein the mixed polyol composition has an average OH value of 330 to 380.

10. A process according to any one of Claims 7 to 9, wherein the ratio of NCO of the isocyanate component to OH of the polyol component, NCO/OH, is 1.00 to 1.20.

11. A process according to any one of Claims 7 to 10, wherein the water is used in an amount of 4 to 7 parts by weight per 100 parts by weight of the polyol component.

12. Use of the rigid polyurethane foam of any one of Claims 1 to 6 as a heat insulator.

13. Use of the rigid polyurethane foam of any one of Claims 1 to 6 as a heat insulataor in a refrigerator.

**Patentansprüche**

1. Polyurethan-Hartschaumstoff, der durch Umsetzung einer Polyolkomponente mit einer Isocyanatkomponente unter Verwendung von ausschließlich Wasser als Treibmittel hergestellt wird, wobei es sich bei der Polyolkomponente um eine gemischte Polyolzusammensetzung handelt, die

(a) 30 bis 55 Gew.-% eines Polyetherpolyols, das durch Addition von Ethylenoxid und Propylenoxid an ein aromatisches Amin erhalten wurde;

(b) 10 bis 20 Gew.-% eines Polyetherpolyols, das durch Addition von Propylenoxid an ein alkoholisches Amin erhalten wurde;

(c) 5 bis 15 Gew.-% eines Polyetherpolyols, das durch Addition von Propylenoxid an ein octafunktionelles Polyol erhalten wurde;

(d) 10 bis 35 Gew.-% eines Polyetherpolyols, das durch Addition von Propylenoxid an ein tetrafunktionelles Polyol erhalten wurde;

(e) 0 bis 15 Gew.-% eines Polyesterpolyols, das durch Kondensation von Diethylenglykol und Dipropylenglykol mit einer Polycarbonsäure oder einem Anhydrid davon erhalten wurde;

(f) 0 bis 25 Gew.-% eines Polyetherpolyols, das durch Addition von Ethylenoxid und Propylenoxid an ein aliphatisches Amin erhalten wurde, umfaßt.

2. Polyurethan-Hartschaumstoff nach Anspruch 1, wobei es sich bei dem aromatischen Amin in Komponente (a) um Tolylendiamin handelt, bei dem alkoholischen Amin in Komponente (b) um Triethanolamin handelt, bei dem octafunktionellen Polyol in Komponente (c) um Saccharose handelt, bei dem tetrafunktionellen Polyol in Komponente (d) um Methylglucosid handelt, bei der Polycarbonsäure oder dem Anhydrid davon in Komponente (e) um Phthalsäureanhydrid handelt und bei dem aliphatischen Amin in Komponente (f) um Ethylendiamin handelt.

3. Polyurethan-Hartschaumstoff nach Anspruch 2, wobei die Menge an Komponente (a) 35 bis 45 Gew.-% beträgt, die Menge an Komponente (b) 10 bis 14 Gew.-% beträgt, die Menge an Komponente (c) 6 bis 10 Gew.-% beträgt, die Menge an Komponente (d) 15 bis 25 Gew.-% beträgt, die Menge an Komponente (e) 3 bis 7 Gew.-% beträgt und die Menge an Komponente (f) 10 bis 20 Gew.-% beträgt.

4. Polyurethan-Hartschaumstoff nach einem der Ansprüche 1 bis 3, wobei die gemischte Polyolzusammensetzung eine mittlere OH-Zahl von 330 bis 380 aufweist.

**5.** Polyurethan-Hartschaumstoff nach einem der Ansprüche 1 bis 3, wobei das Verhältnis von NCO in der Isocyanatkomponente zu OH in der Polyolkomponente, d.h. NCO/OH, 1,00 bis 1,20 beträgt.

**6.** Polyurethan-Hartschaumstoff nach einem der Ansprüche 1 bis 5, wobei Wasser in einer Menge von 4 bis 7 Gewichtsteilen pro 100 Gewichtsteile Polyolkomponente verwendet wird.

**7.** Verfahren zur Herstellung eines Polyurethan-Hartschaumstoffs, das die Umsetzung einer Polyolkomponente mit einer Isocyanatkomponente unter Verwendung von ausschließlich Wasser als Treibmittel umfaßt, wobei es sich bei der Polyolkomponente um eine gemischte Polyolzusammensetzung handelt, die

(a) 30 bis 55 Gew.-% eines Polyetherpolyols, das durch Addition von Ethylenoxid und Propylenoxid an ein aromatisches Amin erhalten wurde;
(b) 10 bis 20 Gew.-% eines Polyetherpolyols, das durch Addition von Propylenoxid an ein alkoholisches Amin erhalten wurde;
(c) 5 bis 15 Gew.-% eines Polyetherpolyols, das durch Addition von Propylenoxid an ein octafunktionelles Polyol erhalten wurde;
(d) 10 bis 35 Gew.-% eines Polyetherpolyols, das durch Addition von Propylenoxid an ein tetrafunktionelles Polyol erhalten wurde;
(e) 0 bis 15 Gew.-% eines Polyesterpolyols, das durch Kondensation von Diethylenglykol und Dipropylenglykol mit einer Polycarbonsäure oder einem Anhydrid davon erhalten wurde;
(f) 0 bis 25 Gew.-% eines Polyetherpolyols, das durch Addition von Ethylenoxid und Propylenoxid an ein aliphatisches Amin erhalten wurde, umfaßt.

**8.** Verfahren nach Anspruch 7, wobei es sich bei dem aromatischen Amin in Komponente (a) um Tolylendiamin handelt, bei dem alkoholischen Amin in Komponente (b) um Triethanolamin handelt, bei dem octafunktionellen Polyol in Komponente (c) um Saccharose handelt, bei dem tetrafunktionellen Polyol in Komponente (d) um Methylglucosid handelt, bei der Polycarbonsäure oder dem Anhydrid davon in Komponente (e) um Phthalsäureanhydrid handelt und bei dem aliphatischen Amin in Komponente (f) um Ethylendiamin handelt.

**9.** Verfahren nach einem der Ansprüche 7 oder 8, wobei die gemischte Polyolzusammensetzung eine mittlere OH-Zahl von 330 bis 380 aufweist.

**10.** Verfahren nach einem der Ansprüche 7 bis 9, wobei das Verhältnis von NCO in der Isocyanatkomponente zu OH in der Polyolkomponente, d.h. NCO/OH, 1,00 bis 1,20 beträgt.

**11.** Verfahren nach einem der Ansprüche 7 bis 10, wobei Wasser in einer Menge von 4 bis 7 Gewichtsteilen pro 100 Gewichtsteile Polyolkomponente verwendet wird.

**12.** Verwendung des Polyurethan-Hartschaumstoffs nach einem der Ansprüche 1 bis 6 als Wärmeisolator.

**13.** Verwendung des Polyurethan-Hartschaumstoffs nach einem der Ansprüche 1 bis 6 als Wärmeisolator in einem Kühlschrank.

**Revendications**

**1.** Mousse rigide de polyuréthanne, produite par réaction d'un composant polyol avec un composant isocyanate, en n'utilisant que de l'eau comme agent d'expansion, ledit composant polyol étant une composition mixte de polyols comprenant

(a) 30 à 55 % en poids d'un polyéther polyol obtenu par addition d'oxyde d'éthylène et d'oxyde de propylène à une amine aromatique,
(b) 10 à 20 % en poids d'un polyéther polyol obtenu par addition d'oxyde de propylène à une amine alcoolique,
(c) 5 à 15 % en poids d'un polyéther polyol obtenu par addition d'oxyde de propylène à un polyol octafonctionnel,
(d) 10 à 35 % en poids d'un polyéther polyol obtenu par addition d'oxyde de propylène à un polyol tétrafonctionnel,

(e) 0 à 15 % en poids d'un polyester polyol obtenu par condensation de diéthylèneglycol et de dipropylèneglycol avec un acide polycarboxylique ou un anhydride de celui-ci, et
(f) 0 à 25 % en poids d'un polyéther polyol obtenu par addition d'oxyde d'éthylène et d'oxyde de propylène à une amine aliphatique.

2. Mousse rigide de polyuréthanne selon la revendication 1, dans laquelle l'amine aromatique dans le composant (a) est la tolylènediamine, l'amine alcoolique dans le composant (b) est la triéthanolamine, le polyol octafonctionnel dans le composant (c) est le saccharose, le polyol tétrafonctionnel dans le composant (d) est le méthylglucoside, l'acide polycarboxylique ou son anhydride dans le composant (e) est l'anhydride phtalique, et l'amine aliphatique dans le composant (f) est l'éthylènediamine.

3. Mousse rigide de polyuréthanne selon la revendication 2, dans laquelle la proportion du composant (a) est de 35 à 45 % en poids, la proportion du composant (b) est de 10 à 14 % en poids, la proportion du composant (c) est de 6 à 10 % en poids, la proportion du composant (d) est de 15 à 25 % en poids, la proportion du composant (e) est de 3 à 7 % en poids et la proportion du composant (f) est de 10 à 20 % en poids.

4. Mousse rigide de polyuréthanne selon l'une quelconque des revendications 1 à 3, dans laquelle la composition mixte de polyols a un indice d'OH moyen de 330 à 380.

5. Mousse rigide de polyuréthanne selon l'une quelconque des revendications 1 à 3, dans laquelle la proportion de NCO du composant isocyanate à l'OH du composant polyol, NCO/OH, est de 1,00 à 1,20.

6. Mousse rigide de polyuréthanne selon l'une quelconque des revendications 1 à 5, dans laquelle l'eau est utilisée en une quantité de 4 à 7 parties en poids pour 100 parties en poids du composant polyol.

7. Procédé de production d'une mousse rigide de polyuréthanne, qui comprend l'étape consistant à faire réagir un composant polyol avec un composant isocyanate en n'utilisant que de l'eau comme agent d'expansion, ledit composant polyol étant une composition mixte de polyols comprenant :
(a) 30 à 55 % en poids d'un polyéther polyol obtenu par addition d'oxyde d'éthylène et d'oxyde de propylène à une amine aromatique,
(b) 10 à 20 % en poids d'un polyéther polyol obtenu par addition d'oxyde de propylène à une amine alcoolique,
(c) 5 à 15 % en poids d'un polyéther polyol obtenu par addition d'oxyde de propylène à un polyol octafonctionnel,
(d) 10 à 35 % en poids d'un polyéther polyol obtenu par addition d'oxyde de propylène à un polyol tétrafonctionnel,
(e) 0 à 15 % en poids d'un polyester polyol obtenu par condensation de diéthylèneglycol et de dipropylèneglycol avec un acide polycarboxylique ou un anhydride de celui-ci, et
(f) 0 à 25 % en poids d'un polyéther polyol obtenu par addition d'oxyde d'éthylène et d'oxyde de propylène à une amine aliphatique.

8. Procédé selon la revendication 7, dans lequel l'amine aromatique dans le composant (a) est la tolylènediamine, l'amine alcoolique dans le composant (b) est la triéthanolamine, le polyol octafonctionnel dans le composant (c) est le saccharose, le polyol tétrafonctionnel dans le composant (d) est le méthylglucoside, l'acide polycarboxylique ou son anhydride dans le composant (e) est l'anhydride phtalique, et l'amine aliphatique dans le composant (f) est l'éthylènediamine.

9. Procédé selon l'une quelconque des revendications 7 ou 8, dans lequel la composition mixte de polyols a un indice d'OH moyen de 330 à 380.

10. Procédé selon l'une quelconque des revendications 7 à 9, dans lequel la proportion de NCO du composant isocyanate à l'OH du composant polyol, NCO/OH, est de 1,00 à 1,20.

11. Procédé selon l'une quelconque des revendications 7 à 10, dans lequel l'eau est utilisée en une quantité de 4 à 7 parties en poids pour 100 parties en poids du composant polyol.

12. Utilisation de la mousse rigide de polyuréthanne de l'une quelconque des revendications 1 à 6 comme isolant thermique.

13. Utilisation de la mouse rigide de polyuréthanne de l'une quelconque des revendications 1 à 6 comme isolant thermique dans un réfrigérateur.

# F I G. I(a)

# F I G. I(b)

# F I G. 2